**Europäisches Patentamt**

**European Patent Office**

**Office européen des brevets**

(19)

(11) Veröffentlichungsnummer: **0 561 190 A1**

## (12) EUROPÄISCHE PATENTANMELDUNG

(21) Anmeldenummer: **93103010.0**

(22) Anmeldetag: **26.02.93**

(51) Int. Cl.5: **G02B 26/00**, G02B 7/182

(30) Priorität: **14.03.92 DE 4208229**

(43) Veröffentlichungstag der Anmeldung:
**22.09.93 Patentblatt 93/38**

(84) Benannte Vertragsstaaten:
**BE DE ES FR GB IT NL PT**

(71) Anmelder: **KRUPP INDUSTRIETECHNIK GMBH**
**Franz-Schubert-Strasse 1-3**
**D-47226 Duisburg(DE)**

(72) Erfinder: **Pausch, Konrad, Dr.-Ing.**
**Berenberger Mark 18**
**W-4300 Essen-Bredeney(DE)**
Erfinder: **Stenvers, Karl-Heinz, Dr.-Ing.**
**Jahnstrasse 12**
**W-4174 Issum(DE)**

(54) **Formeinstellbarer Teleskopspiegel.**

(57) Die Erfindung bezieht sich auf einen formeinstellbaren Teleskopspiegel mit einem aus Glaskeramik bestehenden Spiegelkörper (1), an diesem angreifenden Stützelementen (2) und Stellantrieben (8), die an einem unterstützenden Raumfachwerk (3) gehalten und über welche die Stützelemente bezüglich des letzteren lageeinstellbar sind.

Mit der Erfindung wird der Vorschlag unterbreitet, den dünn ausgebildeten Spiegelkörper (1) über die Stützelemente (2) lösbar an dem Raumfachwerk (3) zu befestigen und mit diesem zu einer in sich tragfähigen Trageinheit zusammenzufassen. Die Stützelemente (2) sind zumindest mit dem Spiegelkörper (1) durch Kleben verbunden.
Die Stellantriebe bestehen aus Piezoelementen (8), über welche auf den Spiegelkörper (1) wechselweise Druck- und Zugkräfte ausübbar sind.

FIG.3

EP 0 561 190 A1

Die Erfindung betrifft einen formeinstellbaren Teleskopspiegel mit einem aus Glaskeramik bestehenden Spiegelkörper, an diesem angreifenden Stützelementen und Stellantrieben, die an einem unterstützenden Raumfachwerk gehalten und über welche die Stützelemente bezüglich des letzteren lageeinstellbar sind.

Die meßtechnische Erfassung extrem lichtschwacher Himmelsobjekte in einer Entfernung von vielen Milliarden Lichtjahren von der Erde ist eine der größten Herausforderungen an die moderne Astronomie; sie macht unter Beibehaltung oder Steigerung der Oberflächengenauigkeiten im Nanometerbereich eine Vergrößerung der Licht sammelnden Fläche von Teleskopspiegeln erforderlich.

Unter dem Gesichtspunkt, die optische Qualität und Wirtschaftlichkeit großer Teleskope zu verbessern, ist mit der Veröffentlichung "Journal of Modern Optics", 1987, Vol. 34, No. 4, 485 bis 509, bereits der Vorschlag unterbreitet worden, einen Teleskopspiegel über an einer Tragkonstruktion abgestützte Stellantriebe formeinstellbar auszubilden. Der Spiegelkörper liegt dabei mit seinem hohen Eigengewicht auf den zugehörigen Stützelementen lediglich auf, so daß die Formeinstellung in Richtung auf die Tragkonstruktion ausschließlich unter Einwirkung der Schwerkraft bewirkt wird, welche auf aufwendig aufgebaute Stellantriebe einwirkt.

In "Technische Mitteilungen Krupp", 1/1990, 27 bis 42, ist ein Teleskop mit einem Spiegelkörper beschrieben, der sich an einem Raumfachwerk, bestehend aus Invarstahl-Knotenelementen und diese miteinander verbindenden Fachwerkstreben, zusammensetzt; letztere weisen Rohre aus carbonfaserverstärktem Kunststoff (CFK) auf, an denen Anschlußkegel ebenfalls aus Invarstahl (Ni 36) durch Einkleben befestigt sind.

Eine für Teleskope geeignete optische Fläche liegt vor, wenn der quadratische Mittelwert (rms = root mean square) der Oberflächenfehler einen Betrag in der Größenordnung von rms = $\lambda/28$ nicht überschreitet, wobei $\lambda$ die Wellenlänge des Lichtes bedeutet. Bei sichtbarem Licht ist dementsprechend dafür Sorge zu tragen, daß die Spiegeloberfläche unter allen Betriebsbedingungen einen rms-Wert von weniger als 18 nm aufweist.

Der Erfindung liegt die Aufgabe zugrunde, einen formeinstellbaren Teleskopspiegel zu entwickkeln, dessen Einsatzmöglichkeit durch geringes Gewicht bei hoher Steifigkeit und durch Senkung der Fertigungskosten verbessert wird. Der Erfindungsgegenstand soll weiterhin derart beschaffen sein, daß durch eine besonders geringe thermische Trägheit unerwünschte thermisch bedingte Luftbewegungen vermieden oder zumindest vermindert werden.

Die gestellte Aufgabe wird durch einen Teleskopspiegel mit den Merkmalen des Anspruchs 1 gelöst. Der Kerngedanke der Erfindung besteht danach in der Schaffung einer in sich tragfähigen Trageinheit ("Hybridspiegel"), bestehend aus einem Verbund aus einem dünnen Spiegelkörper und einem Raumfachwerk, welche über die mit dem Spiegelkörper verklebten Stützelemente und über mit diesen zusammenwirkende Piezoelemente lösbar aneinander befestigt sind. Im Gegensatz zum bekannten Stand der Technik stehen der Spiegelkörper und das Raumfachwerk derart miteinander in Verbindung, daß über die Piezoelemente wechselweise Druck- und Zugkräfte auf den Spiegelkörper ausübbar sind.

Der mit der Anwendung einer Klebeverbindung erzielte Vorteil besteht darin, daß das Klebemittel in einfacher Weise aufgebracht werden kann und sich nach dem Auflegen des Spiegelkörpers auf die Stützelemente mit dem Aushärten eine sehr genaue und spannungsfreie Verbindung bildet.

Mittels der wenig aufwendigen und betriebssicheren Piezoelemente - sie bestehen im einfachsten Fall lediglich aus einem geeignet bemessenen Körper aus Piezokeramik - läßt sich die Form des Spiegelkörpers (im Gegensatz zum Stand der Technik) weggesteuert einstellen bzw. korrigieren. Dabei ist es von Vorteil, daß mit Rücksicht auf die Zusammenfassung von Raumfachwerk und Spiegelkörper letzterer - und damit auch die in sich ausgesteifte Trageinheit - ein erheblich herabgesetztes Eigengewicht bzw. Gesamtgewicht aufweist mit der Möglichkeit des Einsatzes auch im Weltraum.

Die Erfindung ist im übrigen nicht beschränkt auf die Ausstattung mit lediglich einem Spiegelkörper; vielmehr können mehrere entsprechend ausgebildete Trageinheiten zu einem Segment-Teleskopspiegel zusammengesetzt werden.

Damit die Biegemomente möglichst weitgehend abgebaut werden, die sich aus der Formveränderung bzw. Formverstellung des Spiegelkörpers ergeben, weisen die Stützelemente in Richtung auf ihr (d.h. den mit ihnen zusammenwirkenen) Piezoelement zumindest eine als Hals wirkende Einschnürung (Querschnittsverengung) auf (Anspruch 2).

Vorzugsweise ist der Erfindungsgegenstand - vom Spiegelkörper in Richtung auf den jeweils zugehörigen Piezoelement gesehen - mit einer zweiten Klebeverbindung ausgestattet; dabei stehen die Stützelemente unter Zwischenschaltung einer Klebestelle zumindest mittelbar mit ihrem Piezoelement in Verbindung (Anspruch 3). Über diese Klebestelle können während der Montage gleichzeitig Winkel- und Abstandsfehler zwischen dem Spiegelkörper und dem Raumfachwerk ausgeglichen werden, so daß auf eine ansonsten erforderliche höhere Fertigungsgenauigkeit verzichtet werden kann.

Die zweite Klebestelle kann insbesondere in der Weise ausgebildet sein, daß die Stützelemente über eine kalottenförmige Auflagefläche zumindest mittelbar mit ihrem Piezoelement in Verbindung stehen (Anspruch 4).

Bei einer vorteilhaften Ausführungsform des Erfindungsgegenstandes sind die Stützelemente über ein Verlängerungsstück an der Antriebsseite des Piezoelements in Anlage gehalten (Anspruch 5). Eine unter allen Betriebsbedingungen einwandfreie Funktion der Piezoelemente läßt sich dadurch verwirklichen, daß diese - zumindest mittelbar - mit einer Vorspannkraft beaufschlagt sind, die von dem Spiegelkörper weggerichtet ist (Anspruch 6).

Die Piezoelemente sind zweckmäßig an den stirnseitigen Knotenelementen des Raumfachwerks angebracht, welche an dessen dem Spiegelkörper zugewandter Seite liegen (Anspruch 7).

Bei einer bevorzugten Ausführungsform des Erfindungsgegenstandes sind die bereits erwähnten Verlängerungsstücke jeweils über eine Spannschraube lösbar an ihrem Piezoelement festgehalten, wobei sich die Spannschraube über eine Druckfeder mit veränderbarer Vorspannung an dem stirnseitigen Knotenelement abstützt (Anspruch 8). Dies hat zur Folge, daß der jeweils zugehörige Piezoelement über das Verlängerungsstück mittelbar mit der von der Druckfeder erzeugten Vorspannkraft beaufschlagt und dadurch an dem Raumfachwerk bzw. an einem stirnseitigen Knotenelement festgehalten ist. Durch Lösen der Spannschraube kann der Spiegelkörper mit den daran gegebenenfalls befestigten Bauelementen (Stützelemente, Verlängerungsstücke) von dem Raumfachwerk freigesetzt werden. Die Ausstattung mit der erwähnten Vorspanneinheit ermöglicht also einerseits Nachbearbeitungsvorgänge und andererseits ohne aufwendige Justierarbeiten eine genaue Remontage der Trageinheit.

Um der Trageinheit trotz eines möglichst geringen Gesamtgewichts eine ausreichende Steifigkeit und Unempfindlichkeit gegen sich ändernde Betriebsbedingungen (insbesondere thermische und/oder klimatische Änderungen) zu verleihen, sind die Knotenelemente des Raumfachwerks aus Invarstahl gefertigt. Die sie miteinander verbindenden Fachwerkstreben weisen Rohre aus carbonfaserverstärktem Kunststoff (CFK) mit eingeklebten Anschlußkegeln ebenfalls aus Invarstahl auf (Anspruch 9).

Besonders vorteilhaft für ein homogenes Strukturverhalten ist eine Ausführung des Raumfachwerks in Tetraeder-Bauweise. Die dadurch ermöglichte Einheitlichkeit aller Fachwerkstreben und Knotenelemente führt im übrigen zu einer deutlichen Einsparung an Fertigungskosten.

Die als "Hybridspiegel" ausgebildete Trageinheit kann über das zugehörige Raumfachwerk in an sich bekannter Weise an einem Traggestell befestigt sein, über welches der Hybridspiegel bezüglich des zu beobachtenden Objekts ausgerichtet werden kann. Die Ausbildung des Traggestells ist nicht Gegenstand der vorliegenden Erfindung.

Die Erfindung wird nachfolgend anhand eines in der Zeichnung dargestellten Ausführungsbeispiels im einzelnen erläutert.

Es zeigen:

Fig. 1    stark schematisiert eine Seitenansicht eines Hybridspiegels mit einem Spiegelkörper, der über Stellelemente an einem Raumfachwerk befestigt ist,

Fig. 2    schematisiert den Aufbau des in Fig. 1 dargestellten Hybridspiegels im Bereich zweier Knotenelemente des unterstützenden Raumfachwerks und

Fig. 3    als Einzelheit schematisiert einen Schnitt durch den Spiegelkörper und ein Knotenelement des Raumfachwerks.

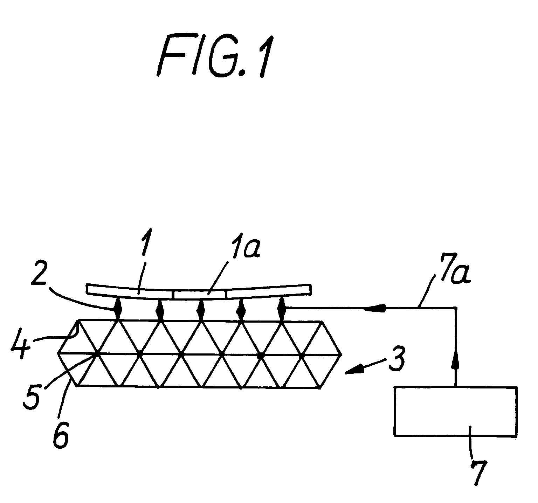

Gemäß Fig. 1 weist der neuartige Hybridspiegel als Hauptbestandteile einen dünnen Spiegelkörper 1 aus Glaskeramik mit einer Mittelöffnung 1a, durch Doppelpfeile angedeutete angetriebene, höhenverstellbare Stützelemente 2 und ein Raumfachwerk 3 auf, welches sich aus außenliegenden Knotenelementen 4, innenliegenden Knotenelementen 5 und diese miteinander verbindenden Fachwerkstreben 6 zusammensetzt. Der Spiegelkörper 1 und das Raumfachwerk 3 sind über die Stützelemente 2 im Betriebszustand derart aneinander befestigt, daß sie miteinander eine in sich tragfähige Trageinheit bilden; diese weist bei ausreichender Steifigkeit ein niedriges Gesamtgewicht auf. Die Bestandteile 4 bis 6 des Raumfachwerks sind derart ausgebildet und ausgelegt, daß das Raumfachwerk bei ausreichender Steifigkeit einen Wärmeausdehnungskoeffizienten aufweist, welcher demjenigen des Spiegelkörpers größenmäßig zumindest sehr nahe kommt.

Die Einstellung der Form des Spiegelkörpers 1 zum Ausgleich von Fertigungsungenauigkeiten und/oder zur Anpassung an sich ändernde Betriebsbedingungen wird über eine (schematisch dargestellte) Regeleinheit 7 bewirkt, welche über ein Leitungssystem 7a die Höhenverstellung der Stützelemente 2 in Richtung auf den Spiegelkörper 1 (d.h. nach oben) oder in Richtung auf das Raumfachwerk 3 (d.h. nach unten) auslöst.

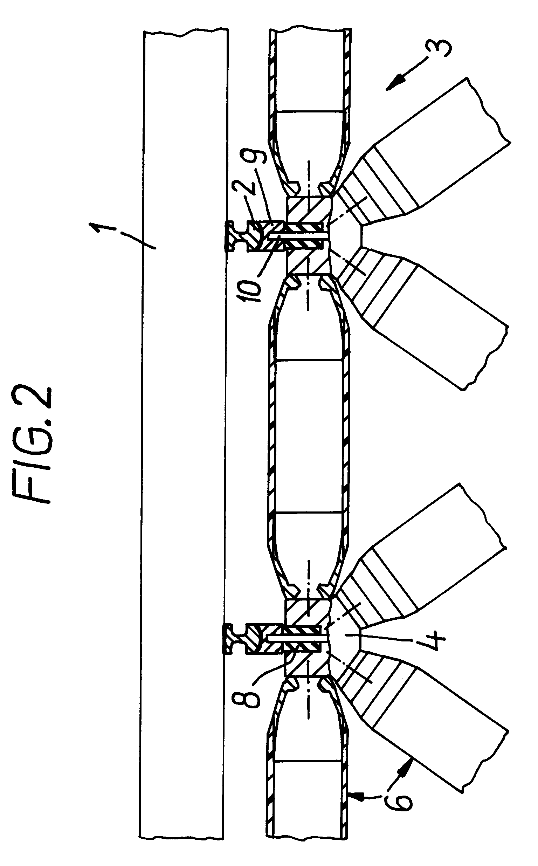

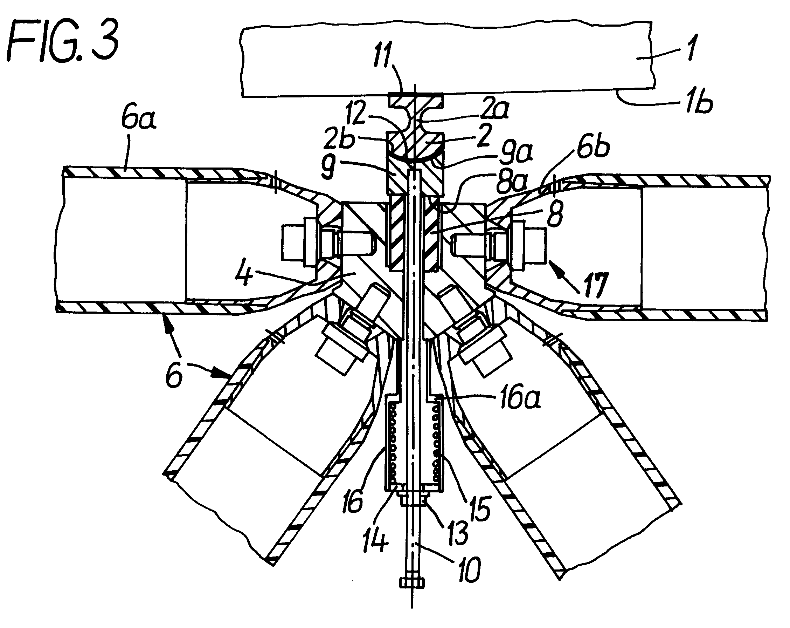

In den außenliegenden Knotenelementen 4 sind als Stellantriebe einfach aufgebaute Piezoelemente 8 angeordnet, an deren nach oben gerichteter Antriebsseite 8a (vgl. dazu Fig. 3) die bereits erwähnten Stützelemente 2 über Zwischenstücke 9 in Anlage gehalten sind, und zwar unter Einwirkung mit den Zwischenstücken verschraubter Spannschrauben 10, die sich außerhalb der stirnseitigen Knotenelemente 4 an diesen abstützen (vgl. Fig. 2 und 3). Die aus Piezokeramik bestehenden Piezoelemente 8 sind dementsprechend buchsenartig ausgebildet und von den Spannschrauben 10 mit seitlichem Abstand durchdrungen.

Mit dem Anlegen eines elektrischen Feldes erfahren die Piezoelemente 8 eine proportionale elastische Dehnung bzw. Kompression mit der Folge, daß die Teile 2 und 9 bezüglich des zugehörigen Knotenelements 4 eine Bewegung nach oben oder unten ausführen und dabei den verformbaren Spiegelkörper 1 in dem betreffenden Bereich mitbewegen.

Die Stützelemente 2, die über eine Klebestelle 11 an der Unterseite 1b des Spiegelkörpers 1 befestigt sind, weisen im Bereich zwischen diesem und dem Zwischenstück 9 eine als Hals wirkende Einschnürung 2a auf und stützen sich über eine Wölbung 2b an einer kalottenförmigen Auflagefläche 9a der Zwischenstücke 9 ab; dort sind sie über eine zweite Klebestelle 12 unlösbar aneinander befestigt.

Durch die Einschnürung 2a können zwischen dem Spiegelkörper 1 und dem zugehörigen Knotenelement 4 auftretende Biegemomente weitgehend reduziert werden.

Die Anwendung von Klebeverbindungen einerseits zwischen dem Spiegelkörper und den Stützelementen und andererseits zwischen diesen und den Zwischenstücken ermöglicht bei herabgesetzten Anforderungen an die Fertigungsgenauigkeit anläßlich der Montage des Hybridspiegels die Herstellung eines genauen und spannungsfreien Verbundes.

Jedes Zwischenstück 9 ist oberhalb des abstützenden Piezoelements 8 mit der bereits erwähnten Spannschraube 10 verschraubt, die auf der vom Spiegelkörper 1 abgewandten Seite des Knotenelements 4 aus diesem heraustritt. Die Spannschraube stützt sich unterhalb des Knotenelements über eine Einstellmutter 13 und eine Spannplatte 14 an einer vorgespannten Druckfeder 15 ab, die innerhalb eines Gehäuses 16 auf einem Auflager 16a ruht.

Das Gehäuse, in welchem sich die Spannplatte 14 in dessen Längsrichtung bewegen kann, ist an der Unterseite des betreffenden Knotenelements 4 befestigt.

Unter der Einwirkung der Druckfeder 15 und der Spannschraube 10 wird das Stützelement 2 über das Zwischensdtück 9 elastisch an dem Piezoelement 8 in Anlage gehalten, so daß auch auf diesen eine definierte Vorspannung einwirkt und unter allen Betriebsbedingungen eine einwandfreie Auflage des Zwischenstücks 9 auf der Antriebsseite 8a gewährleistet ist.

Die soeben beschriebene Ausbildung ermöglicht es außerdem, den Spiegelkörper 1 durch Betätigung der Spannschraube 10 in einfacher Weise zu demontieren bzw. ohne Durchführung aufwendiger Justierarbeiten zu remontieren.

Die Fachwerkstreben 6 weisen Rohre 6a aus carbonfaserverstärktem Kunststoff und in diese eingeklebte Anschlußkegel 6b auf; letztere bestehen - ebenso wie die Teile 2, 9 und 4 - aus Invarstahl (Ni 36).

Die Fachwerkstreben 6 sind über an den Anschlußkegeln 6b angreifende Schraubelemente 17 an den Knotenelementen 4 bzw. 5 (vgl. Fig. 2) befestigt.

Der mit der Erfindung erzielte Vorteil besteht auch darin, daß der neuartige Hybridspiegel infolge seines niedrigen Gesamtgewichts eine besonders geringe thermische Trägheit aufweist, wodurch sich die Entstehung thermisch bedingter Luftbewegungen oberhalb des Spiegelkörpers 1 leichter vermeiden läßt.

**Patentansprüche**

1.  Formeinstellbarer Teleskopspiegel mit einem aus Glaskeramik bestehenden Spiegelkörper (1), an diesem angreifenden Stützelementen (2) und Stellantrieben (8), die an einem unterstützenden Raumfachwerk (3) gehalten und über welche die Stützelemente bezüglich des letzteren lageeinstellbar sind, **dadurch gekennzeichnet,** daß der dünn ausgebildete Spiegelkörper (1) über die Stützelemente (2), die zumindest mit ihm durch Kleben verbunden sind, lösbar an dem Raumfachwerk (3) befestigt und mit diesem zu einer in sich tragfähigen Trageinheit zusammengefaßt ist, und daß die Stellantriebe aus Piezoelementen (8) bestehen, über welche auf den Spiegelkörper (1) wechselweise Druck- und Zugkräfte ausübbar sind.

2.  Teleskopspiegel nach Anspruch 1, dadurch gekennzeichnet, daß die Stützelemente (2) in Richtung auf ihr Piezoelement (8) zumindest eine als Hals wirkende Einschnürung (2a) aufweisen.

3.  Teleskopspiegel nach zumindest einem der vorhergehenden Ansprüche, dadurch gekennzeichnet, daß die Stützelemente (2) unter Zwischenschaltung einer Klebestelle (12) zumindest mittelbar mit ihrem Piezoelement (8) in Verbindung stehen.

4.  Teleskopspiegel nach Anspruch 3, dadurch gekennzeichnet, daß die Stützelemente (2) über eine kalottenförmige Auflagefläche (9a) zumindest mittelbar mit ihrem Piezoelement (8) in Verbindung stehen.

**5.** Teleskopspiegel nach zumindest einem der Ansprüche 3 bis 4, dadurch gekennzeichnet, daß die Stützelemente (2) über ein Verlängerungsstück (9) an der Antriebsseite (8a) des Piezoelements (8) in Anlage gehalten sind.

**6.** Teleskopspiegel nach zumindest einem der vorhergehenden Ansprüche, dadurch gekennzeichnet, daß die Piezoelemente (8) zumindest mittelbar mit einer Vorspannkraft beaufschlagt sind, die von dem Spiegelkörper (1) weggerichtet ist.

**7.** Teleskopspiegel nach zumindest einem der vorhergehenden Ansprüche, dadurch gekennzeichnet, daß die Piezoelemente (8) an den stirnseitigen Knotenelementen (4) des Raumfachwerks (3) angebracht sind, welche an dessen den Spiegelkörper (1) zugewandter Seite liegen.

**8.** Teleskopspiegel nach den Ansprüchen 5 bis 7, dadurch gekennzeichnet, daß die Verlängerungsstücke (9) jeweils über eine Spannschraube (10) lösbar an ihrem Piezoelement (8) festgehalten sind, die sich über eine Druckfeder (15) an dem stirnseitigen Knotenelement (4) abstützt.

**9.** Teleskopspiegel nach zumindest einem der vorhergehenden Ansprüche, dadurch gekennzeichnet, daß die Knotenelemente (4, 5) des Raumfachwerks (3) aus Invarstahl bestehen und die sie miteinander verbindenden Fachwerkstreben (6) Rohre (6a) aus carbonfaserverstärktem Kunststoff mit eingeklebten Anschlußkegeln (6b) aus Invarstahl aufweisen.

# FIG.1

# FIG.2

FIG.3

EP 0 561 190 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-5 037 190 (M.A.EALEY ET AL.)<br>* Spalte 4, Zeile 11 - Spalte 5, Zeile 63; Ansprüche 1-4; Abbildung 2 *<br>--- | 1-3 | G02B26/00<br>G02B7/182 |
| A | OPTICAL ENGINEERING<br>Bd. 29, Nr. 11, November 1990, BELLINGHAM US<br>Seiten 1342 - 1350<br>ST.E.FORMAN ET AL. 'Laser radar beam steering mirrors'<br>* Chapter 2.1.  figure 4 *<br>--- | 1,9 | |
| A | DE-C-3 521 973 (CARL ZEISS)<br>* Zusammenfassung; Abbildungen *<br><br>----- | 1 | |

| | RECHERCHIERTE SACHGEBIETE (Int. Cl.5) |
|---|---|
| | G02B |

Der vorliegende Recherchenbericht wurde für alle Patentansprüche erstellt

| Recherchenort | Abschlußdatum der Recherche | Prüfer |
|---|---|---|
| BERLIN | 23 JUNI 1993 | FUCHS R. |